**Europäisches Patentamt**

**European Patent Office**

**Office européen des brevets**

(19)

(11) Veröffentlichungsnummer : **0 218 731**
**B1**

(12) **EUROPÄISCHE PATENTSCHRIFT**

(45) Veröffentlichungstag der Patentschrift :
03.01.90

(21) Anmeldenummer : 85110980.1

(22) Anmeldetag : 09.10.85

(51) Int. Cl.⁵ : **B 62 M 3/08, A 43 B 5/14**

(54) **Sicherheitspedal für Rennrad.**

(43) Veröffentlichungstag der Anmeldung :
22.04.87 Patentblatt 87/17

(45) Bekanntmachung des Hinweises auf die Patenterteilung : 03.01.90 Patentblatt 90/01

(84) Benannte Vertragsstaaten :
AT BE DE FR IT LU NL

(56) Entgegenhaltungen :
DE—U— 7 922 372
FR—A— 2 385 582
GB—A— 14 326
IT—A— 1 029 604
JP—A—53 131 634
US—A— 4 361 972

(73) Patentinhaber : Peters, Tilo
Schwaighofstrasse 51
D-8180 Tegernsee (DE)

Reiffenstuel, Hans
Pitscherweg 1
D-8183 Rottach-Egern (DE)

(72) Erfinder : Peters, Tilo
Schwaighofstrasse 51
D-8180 Tegernsee (DE)
Erfinder : Reiffenstuel, Hans
Pitscherweg 1
D-8183 Rottach-Egern (DE)

(74) Vertreter : LOUIS, PÖHLAU, LOHRENTZ & SEGETH
Kesslerplatz 1 Postfach 3055
D-8500 Nürnberg-1 (DE)

EP 0 218 731 B1

Jouve, 18, rue St-Denis, 75001 Paris, France

## Beschreibung

Die Erfindung betrifft eine lediglich durch eine bestimmte Bewegung des Fußes sofort lösbare Verbindung des Schuhes mit der Pedalachse bei Fahrrädern, insbesondere Rennrädern.

Ein bisher übliches Rennradpedal besteht aus dem eigentlichen Pedalkörper und der verstellbaren Riemenvorrichtung, die beim Einsteigen fest um den Vorderschuh gespannt wird. Diese feste Verbindung erlaubt beim Treten nicht nur Druck auf das abwärtsdrehende Pedal, sondern zusätzlich Zug beim aufwärtsdrehenden Pedal.

Diese feste Verbindung aber hat zur Folge, daß sie beim Auftreten einer plötzlichen Gefahr nicht sofort gelöst werden kann. Das Resultat sind schwere Stürze durch Hängenbleiben in den Pedalen.

Als unerwünschte Wirkung hat sich darüberhinaus erwiesen, daß durch den straffen Riemenzug die Kreislauffunktion des Vorderfußes beeinträchtigt wird. Außerdem ist durch die Riemenvorrichtung das gesamte Pedal stark kopflastig, und dreht deshalb bei Nichtbelastung — z. B. beim Schieben — sofort in die hängende Position. Es muß wieder nach oben gedreht werden, damit das Einsteigen möglich wird.

Um diese Nachteile zu beseitigen, wurde bereits in der Vergangenheit eine schnell schließ -und lösbare Verbindung von freistehender Pedalachse und Schuh mittels hülsenförmiger Aufnahmevorrichtung am Schuh angemeldet. Eine solche Einrichtung — wie sie auch im Oberbegriff des Anspruchs 1 definiert ist — ist aus dem Gebrauchsmuster Nr. GM 79 22 372 bekannt. Diese Vorrichtung dürfte sich wegen mangelnder Festigkeit der Verbindung (schwacher Rastmechanismus) in der Praxis nicht bewährt haben.

Aufgabe der im folgenden beschriebenen Vorrichtung ist es, den unverzichtbaren Vorteil des konventionellen Riemenpedals (Zugkraft am aufwärtsdrehenden Pedal, s. o.) voll zu erhalten, ferner eine gleichbleibende, günstige Einsteigeposition frei am Schuh zu gewährleisten, schnellstmöglich eine sichere, feste Verbindung herzustellen, und vor allem diese bei Gefahr sofort lösen zu können.

Diese Aufgabe wird erfindungsmäßig gelöst durch die im Hauptanspruch aufgeführten Merkmale. Weitere Ausgestattungen der Erfindung sind in den abhängigen Anspruchen angegeben. Die Erfindung besteht aus einer an der Schuhsohle befestigten — bzw. integrierten — Aufnahmevorrichtung, in die eine an der Tretkurbel des Fahrrades befestigte, freistehende Pedalachse, die mit einer drehbaren, äußeren Lagerhülse ausgestattet ist, eingeführt wird.

Die Aufnahmevorrichtung an der Schuhsohle, quer zur Schuhlängsachse angeordnet, ist als eine zur Schuhspitze hin in ihrer Längsachse offene Hülse mit federnder Randlippe ausgebildet.

Um die Verbindung Pedalachse/Schuh herzustellen, wird die offene Seite der Aufnahmevorrichtung gegen die Pedalachse, bzw. deren drehbare, äußere Lagerhülse gedrückt. Da die Öffnung der Aufnahmevorrichtung etwas kleiner ist als der Durchmesser der Lagerhülse, bewirkt der federnde Öffnungsrand der Aufnahmevorrichtung zuerst ein Nachgeben, dann die Rückkehr in Ruhestellung, was ein festklemmendes Umgreifen der drehbaren Lagerhülse bedeutet. Die Ausnehmung der Aufnahmevorrichtung umgreift die Lagerhülse zweckmäßig über einen Winkel von ca. 180°, und der zungenförmig ausgebildete Öffnungsrand verlängert dann den Umgreifungswinkel über 180° hinaus, in dessen Bereich die Festklemmung wirksam wird.

Das Material, aus dem der federnde Öffnungrand besteht, darf nicht ermüden, weil dadurch die federnde Klemmwirkung beeinträchtigt wird.

Diese Klemmkraft ist so gewählt, daß das beim Rennradfahren erforderliche Aufwärtsziehen des Pedals uneingeschränkt erhalten bleibt. Somit ist durch kurzes Drücken und Einrasten eine Verbindung Schuh/Pedalachse hergestellt, die die Aufgabe eines konventionellen Rennradpedals voll erfüllt.

Hauptzweck des neuen Systems aber ist das blitzschnelle Aussteigen bei Eintreten einer plötzlichen Gefahr. Dazu wird der Schuh nur kurz nach innen oder außen auf horizontaler Ebene verdreht, wodurch sich die Klemmverbindung sofort und sicher löst.

Ein versehentliches Aussteigen ist so gut wie ausgeschlossen, da die entsprechende Bewegung während des normalen Fahrens nicht vorkommt.

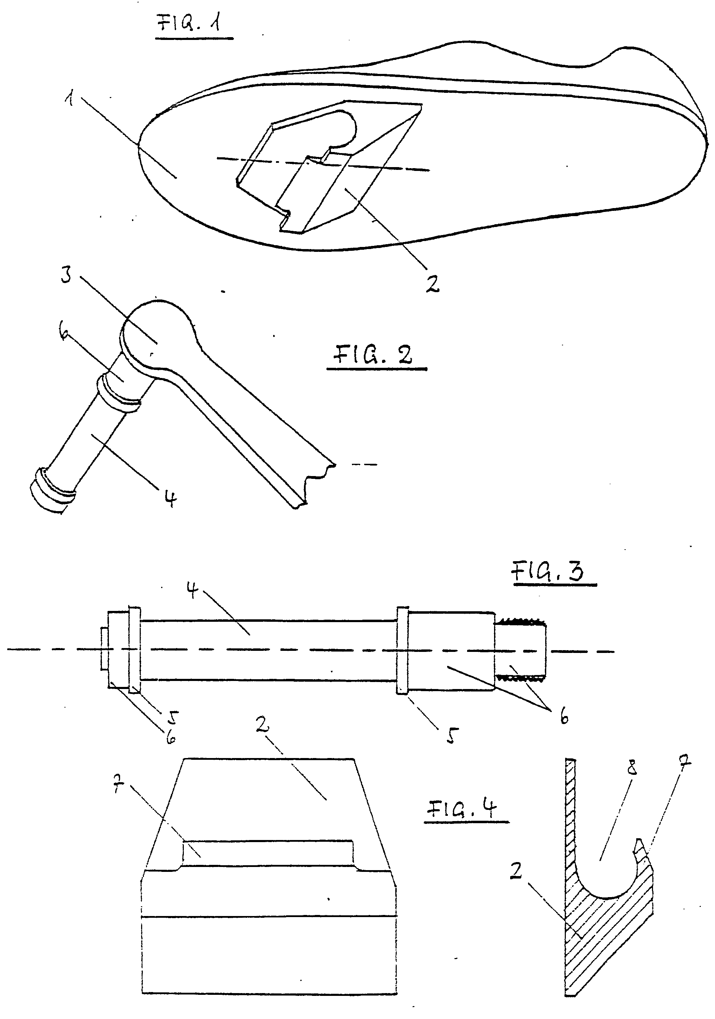

Zu den Figuren 1-4 ist ein Ausführungsbeispiel dargestellt. Es zeigt

Fig. 1 Gesamtansicht der Aufnahmevorrichtung am Schuh.

Fig. 2 Freistehende Pedalachse mit drehbarer Lagerhülse, an der Pedalkurbel befestigt.

Fig. 3 Längsschnitt der Pedalachse.

Fig. 4 Aufriß und Querschnitt der Aufnahmevorrichtung.

Funktionsbeschreibung des Ausführungsbeispiels

Um eine feste Verbindung zwischen Pedalachse (4, 6) und Aufnahmevorrichtung (2) am Schuh (1) herzustellen, wird die Pedalachse (6) mit ihrer drehbaren Lagerhülse (4) gegen die Ausnehmung (8) und zugleich gegen deren federnde Randlippe (7) der Aufnahmevorrichtung (2) gedrückt. Dabei gibt die federnde Randlippe (7) nach, wodurch die Pedalachse (6) mit ihrer drehbaren Lagerhülse (4) in die Ausnehmung (8) einrastet. Die Flansche (5) der Lagerhülse dienen dabei als seitliche Arretierung während und nach dem Einrasten.

Um die Verbindung zu lösen, genügt ein horizontales Verdrehen (Verwinden) des Schuhs mit der Aufnahmevorrichtung gegenüber der Pedalachse.

**Patentansprüche**

1. Einrichtung zur Verbindung der Pedalachse (6) eines Fahrrades mit einem sich gegen die Achse abstützenden Schuh, wobei die Pedalachse und eine auf ihr drehbar angeordnete Lagerhülse (4) durch eine sich parallel zur Pedalachse erstreckende Öffnung einer an einem an der Schuhsohle mittels einer Basisplatte angeordneten Beschlag (2) ausgebildeten Ausnehmung (8) in diese unter Verklemmung der Lagerhülse einführbar und dadurch die Pedalachse mit dem Beschlag gegen eine der Einführrichtung entgegengesetzte Bewegung verriegelbar ist, wobei die Verriegelung durch eine den Verriegelungswiderstand überwindende, durch Bewegung des Fußes über den Schuh in den Beschlag eingeleitete Kraft lösbar ist, dadurch gekennzeichnet, daß die Einführöffnung der Ausnehmung und ein im Abstand zur Basisplatte verlaufender, federnd elastisch ausgebildeter, die Lagerhülse festklemmend übergreifender Abschnitt (7) des Öffnungsrandes der Schuhspitze zugewandt ist.

2. Einrichtung nach Anspruch 1, dadurch gekennzeichnet, daß der Abschnitt (7) an einem Kunststoff-Formteil für den Beschlag ausgebildet ist.

3. Einrichtung nach einem der vorhergehenden Ansprüche, dadurch gekennzeichnet, daß der Abstand zwischen dem federnden Öffnungsrand und der Basisplatte geringer ist als der Außendurchmesser der Lagerhülse.

4. Einrichtung nach einem der vorhergehenden Ansprüche, dadurch gekennzeichnet, daß der Abschnitt (7) zungenförmig ausgebildet ist.

5. Einrichtung nach einem der vorhergehenden Ansprüche, dadurch gekennzeichnet, daß an den Enden der Lagerhülse (4) jeweils ein Flansch (5) vorgesehen ist, mittels dessen sich die Lagerhülse in der Klemmlage gegen den Beschlag abstützt.

6. Einrichtung nach einem der vorhergehenden Ansprüche, dadurch gekennzeichnet, daß die Lagerhülse als Kunststoff-Formteil ausgebildet ist.

7. Einrichtung nach einem der vorhergehenden Ansprüche, dadurch gekennzeichnet, daß der Beschlag und die Schuhsohle einstückig ausgebildet sind.

8. Schuh zur Verwendung bei einer Einrichtung nach einem der vorhergehenden Ansprüche, an dessen Sohle ein Beschlag mit den Merkmalen des Anspruchs 1 und ggf. der Ansprüche 2 bis 4 und 7 angeordnet ist.

**Claims**

1. Device for connecting the pedal spindle (6) of a bicycle to a shoe supported against the spindle, the pedal spindle and a bearing sleeve (4) arranged rotatably on it being insertable through an opening, extending parallel to the pedal spindle, of a recess (8) formed on a fitting (2) arranged on the sole of the shoe by means of a base plate, into said recess with clamping of the bearing sleeve, the pedal spindle thereby being lockable with the fitting against a movement counter to the direction of insertion, the lock being releasable by a force which overcomes the locking resistance and is applied to the fitting via the shoe by moving the foot, characterized in that the insertion opening of the recess and a portion (7) of the opening rim face the toe of the shoe, said portion extending at a distance from the base plate, being of resiliently elastic design and fitting over the bearing sleeve so as to clamp it.

2. Device according to Claim 1, characterized in that the portion (7) is formed on a plastics moulding for the fitting.

3. Device according to one of the preceding claims, characterized in that the distance between the resilient opening rim and the base plate is less than the outside diameter of the bearing sleeve.

4. Device according to one of the preceding claims, characterized in that the portion (7) is of tongue-shaped design.

5. Device according to one of the preceding claims, characterized in that a flange (5) by means of which, in the clamped position, the bearing sleeve is supported against the fitting is provided at each end of the bearing sleeve (4).

6. Device according to one of the preceding claims, characterized in that the bearing sleeve is in the form of a plastics moulding.

7. Device according to one of the preceding claims, characterized in that the fitting and the shoe sole are of integral design.

8. Shoe for use with a device according to one of the preceding claims, on the sole of which is arranged a fitting having the features of Claim 1 and, if appropriate, of Claims 2 to 4 and 7.

## Revendications

1. Agencement pour relier l'arbre de pédale (6) d'une bicyclette avec une chaussure s'appuyant sur l'arbre de pédale, l'arbre de pédale et un manchon de coussinet (4) monté en rotation sur l'arbre de pédale pouvant être introduits, en serrant le manchon de coussinet, dans un évidement (8), par une ouverture de celui-ci s'étendant parallèlement à l'arbre de pédale, formé dans une garniture (2) agencée sur la semelle de la chaussure au moyen d'une plaque de base, l'arbre de pédale pouvant être verrouillé de cette manière avec la garniture à l'encontre d'un mouvement opposé à la direction d'introduction, le verrouillage pouvant être libéré par une force, provoquée dans la garniture par un mouvement du pied sur la chaussure, qui surmonte la résistance de verrouillage, caractérisé en ce que l'ouverture d'introduction de l'évidement et un élément (7) du bord de l'ouverture, qui recouvre et enserre le manchon d'appui, qui est réalisé sous une forme élastique en faisant ressort et qui s'étend à distance de la plaque de base, sont orientés vers la pointe de la chaussure.

2. Agencement suivant la revendication 1, caractérisé en ce que l'élément (7) est formé en une pièce moulée en matière plastique pour la garniture.

3. Agencement suivant l'une ou l'autre des revendications précédentes, caractérisé en ce que la distance entre le bord d'ouverture faisant ressort et la plaque de base est plus petite que le diamètre externe du manchon de coussinet.

4. Agencement suivant l'une quelconque des revendications précédentes, caractérisé en ce que l'élément (7) est réalisé sous forme de languette.

5. Agencement suivant l'une quelconque des revendications précédentes, caractérisé en ce qu'à chacune des extrémités du manchon de coussinet (4) est prévu un flasque au moyen duquel le manchon de coussinet appuie, en position coincée, contre la garniture.

6. Agencement suivant l'une quelconque des revendications précédentes, caractérisé en ce que le manchon de coussinet est formé en une pièce moulée en matière plastique.

7. Agencement suivant l'une quelconque des revendications précédentes, caractérisé en ce que la garniture et la semelle de chaussure sont formées en une seule pièce.

8. Chaussure, pour une utilisation dans un agencement selon l'une quelconque des revendications précédentes, à la semelle de laquelle est disposée une garniture présentant les caractéristiques de la revendication 1 et, le cas échéant, des revendications 2 à 4 et 7.

FIG. 1

1

2

3

6

4

FIG. 2

FIG. 3

4

5
6

5

6

2

7

8 7

2

FIG. 4